# EUROPEAN PATENT APPLICATION

(11) **EP 2 079 013 A1**
(43) Date of publication of application: **15.07.2009**
(21) Application number: 08003383.0
(22) Date of filing: 25.02.2008
(51) Int. Cl.: G06F 3/06

(54) **Combination drive**

(30) Priority: 10.01.2008 US 971920
(71) Applicant: Philips & Lite-On Digital Solutions Corporation, Neihu District Taipei (TW)
(72) Inventor: Roth, Karsten, Neihu District Taipei (TW); Imas, Arman, Neihu District Taipei (TW); Schmidt, Holger, Neihu District Taipei (TW)
(74) Representative: Hager, Thomas Johannes

(57) **Abstract**

A combination drive (200, 300) includes a housing (210, 310), a solid-state drive (240), an optical disc drive (252) and associated controller (251, 351), a data/command connector (260), and a shared power source connector (281), and a data/command bus (270, 370). When coupled to a host controller (20), the optical disc drive (252) and the solid-state drive (240) may appear to the host controller (20) as separate and independent logical devices. Alternatively, when coupled to a host controller (20), the optical disc drive (252) and the solid-state drive (240) may appear to the host controller (20) as a single logical read/write device. Data transfer between the solid-state drive (240) and the optical disc drive (252) may be controlled by the optical disc drive controller (251, 351) and occurs directly, without requiring intervening transfer of the data to and from the host controller (20).

## Description

The present invention relates to a combination drive according to the pre-characterizing clause of claim 1.

As the size of multi-functional electronic devices has trended smaller and smaller, it becomes increasingly a challenge to physically fit both an optical disc drive and a traditional hard disk drive, normally necessary for data and operating system storage, into some of the newer machines without compromises being made. Besides the size issue, there must also be separate power and data access channels, one for the optical disc drive and one for the hard disk drive, complicating the manufacture, size, and cost issues even further.

Recently, technological, and supply and demand factors have reduced the cost and increased the size of flash memory chips to the point where Solid State Drives (SSD) replacing the traditional hard disk drive is becoming a reality, eliminating some of the problems traditionally associated with traditional mechanical hard disk drives, such as high power consumption, moving parts, environmental concerns, separate power connections, and communications problems. However, merely exchanging the type of hard disk drive from traditional rotating platters to one comprised of flash memory does nothing to eliminate the size, power, and data access problems.

This in mind, the present invention aims at providing a combination drive that eliminates the size, power, and data access problems.

This is achieved by a combination drive according to claim 1. The dependent claims pertain to corresponding further developments and improvements.

As will be seen more clearly from the detailed description following below, the claimed combination drive includes a circuit structure that has both optical disc drive and solid-state drive functions.

In the following, the invention is further illustrated by way of example, taking reference to the accompanying drawings. Thereof
Fig.1 is a functional block diagram of a combination drive of a first embodiment according to the present invention.
Fig.2 is a functional block diagram of a combination drive of a second embodiment according to the present invention.
Fig.3 is a more detailed functional block diagram of the combination drive of Fig.1.
Fig.4 is a more detailed functional block diagram of the combination drive of Fig.2.

The invention reduces physical drive storage requirements and increases consumer convenience by introducing two major variations of a combination drive through an innovative arrangement and partial integration of a Solid State Drive (SSD) and an optical disc drive (ODD). The optical disc drive can be redesigned to also comprise a user accessible, non-volatile data storage device in one product, saving cost and space while providing added convenience to the user through providing additional storage for data that is independent from data and/or programs required for functionality of the ODD. Throughout this application and claims, the term "user accessible" is intended to mean that an ordinary user can read data and/or files from and/or write data and/or files to the data-storage device in the same manner from the view of the user as with any other traditional mass storage device.

The invention is applicable to any automotive, consumer, computer, or any multimedia device electronic device requiring data storage and two major embodiments are disclosed herein.

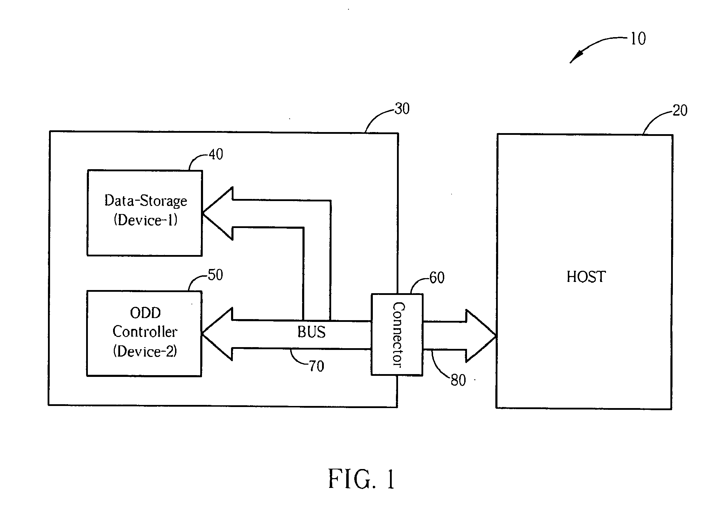

Please refer to Fig.1, which is a functional block diagram disclosing the general idea of a combination drive 10, which is a first embodiment of the invention. Combination drive 10 comprises a housing 30, and inside the housing 30 are an optical disc drive and associated controller 50, a user accessible solid-state drive 40, and a connector 60. The solid-state drive 40 may be a non-volatile data-storage device 40 of the present invention. An end of the connector 60 couples to a data/command bus 70, which in turn couples to each of the optical disc drive 50 and the data-storage device 40. The other end of the connector 60 may couple to a data/command bus 80, which in turn may couple to a host controller 20. The data-storage device 40 comprises user accessible, non-volatile memory (and may be a form of flash memory), which may be in the structure of one or more individual chips. The data-storage device 40, the optical disc drive controller 50 are preferably assembled on a single printed circuit board (PCB).

When coupled to the host controller 20, each of the optical disc drive 50 and the data-storage device 40, via different communication channels, appears to the host controller 20 and is controlled by the host controller 20 as an independent logical device, but share the common connector 60 and power source connector (not shown).

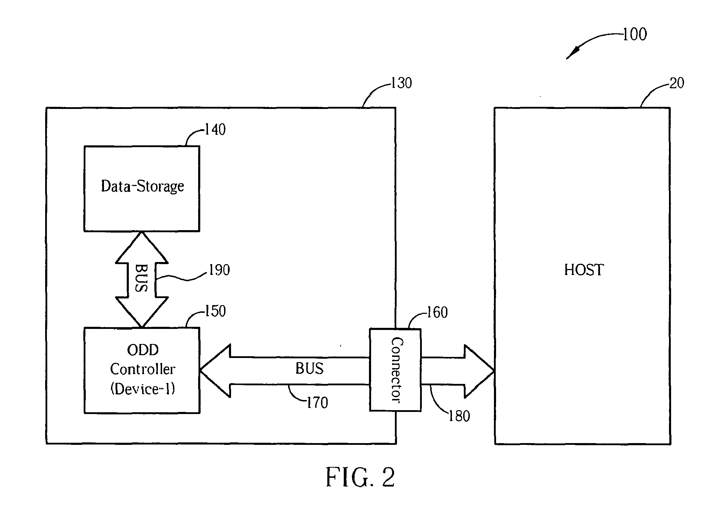

Now please refer to Fig.2, which is a functional block diagram disclosing the general idea of a combination drive 100, which is a second embodiment of the invention. Combination drive 100 comprises a housing 130. Inside the housing 130 are an optical disc drive and associated controller 150, a user accessible solid-state drive 140, and a connector 160. The solid-state drive 140 may be non-volatile data-storage device 140 of the present invention. A first end of the connector 160 couples to a data/command bus 170, which in turn couples to the optical disc drive 150. A second data/command bus 190 couples the optical disc controller 150 to the data-storage device 140. A second end of the connector 160 may couple to a data/command bus 180, which in turn may couple to a host controller 20. The data-storage device 140 comprises user accessible, non-volatile memory (and may be a form of flash memory), which may be in the structure of one or more individual chips. The data-storage device 140, the optical disc drive controller 150 are preferably assembled on a single printed circuit board (PCB).

When coupled to the host controller 20, the optical disc drive 150 and the data-storage device 140 appear to the host controller 20 and are controlled by the host controller 20 as a single logical device, and share the common connector 160 and power source connector (not shown). The single logical device 100 may appear as a read/write unit to the host controller 20. The combination drive 100 may utilize direct data exchange between the optical disc drive 150 and the data-storage device 140 without requiring data transfer to and/or from the host controller 20.

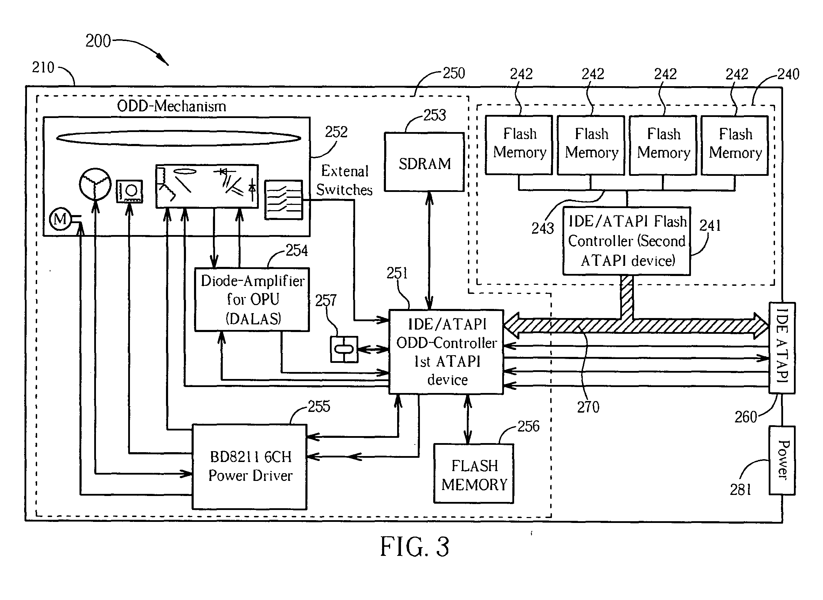

Please refer now to Fig.3, which is a more detailed functional block diagram of a combination drive 200 that is one possible implementation of the combination drive 10 shown in Fig.1. The combination drive 200 comprises a casing 210. Fixed to a surface of the casing 210 are an IDE/ATAPI interface connector 260 and a power source connector 281. Inside the casing 210 are an optical disc drive 250 and a user accessible non-volatile data-storage device 240. A data/command bus 270 connects the IDE/ATAPI interface connector 260 to each of the optical disc drive 250 and the data-storage device 240. In accordance with the first embodiment of the present invention, this shared bus 270 arrangement allows each of the optical disc drive 250 and the data-storage device 240, via different communication channels, to appear to the host controller 20 and be controlled by the host controller 20 as an independent logical device, but share the common IDE ATAPI interface connector 260 and power source connector 281. With the exception of mechanical portions of the optical disc drive 250, it is preferable to integrate the optical disc drive 250 and the data-storage device 240 onto a single printed circuit board (PCB).

As shown in Fig.3, the optical disc drive 250 may comprise an optical disc drive mechanism 252, which includes the mechanical portions of an optical disc drive as known to those skilled in the art. Also comprised by the optical disc drive 250 may be an IDE/ATAPI optical disc drive controller 251 which is coupled to the data/command bus 270 for communications with a host controller and also may be coupled to an SDRAM 253 for a working memory, to external switches of the optical disc drive mechanism 252, to a diode-amplifier 254 for OPU, to a BD8211 6CH power driver 255, to other components 257, and to a flash memory 256 for access to operational codes. The exact parts and/or couplings shown in Fig.3 are for illustration only and may be altered according to design considerations without departing from the spirit of the invention.

The user accessible non-volatile data-storage device 240 comprises one or more flash memories 242, each coupled to an IDE/ATAPI flash controller 241 via a data/command bus 243. The IDE/ATAPI flash controller 241 is also coupled to the data/command bus 270 for communications with a host.

When coupled to a host controller (such as a computer or other electronic device), the optical disc drive 250 and the data-storage device 240 each appears to the host controller and is controlled by the host controller as a separate logical device, but share the IDE ATAPI interface connector 260 and power source connector 281. In another embodiment, the flash memory 256 and the flash memory 242 may be integrated into a single physical unit which is logically divided into non-overlapping separate logical units, a first logical unit for supplying operational codes to the IDE/ATAPI optical disc drive controller 251 and a second logical unit for the IDE/ATAPI flash controller 241. In this case, the first logical unit preferably is not directly accessible (except possibly for a firmware upgrade) by the user.

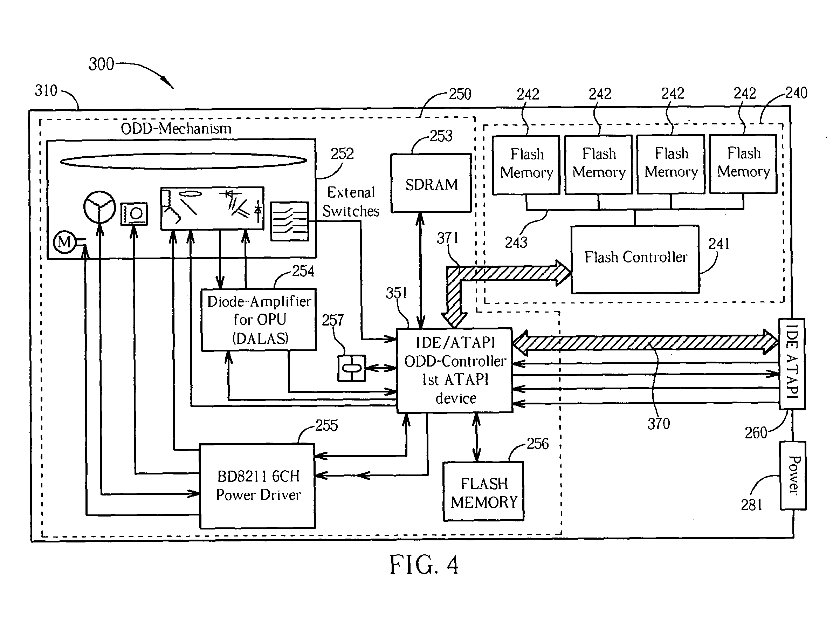

Please refer now to Fig.4, which is a more detailed functional block diagram of a combination drive 300 that is one possible implementation of the combination drive 100 shown in Fig.2. Components in Fig.4 having the same labeling number as components shown in Fig.3 indicate similarities in function. Those components having differing labeling numbers in Fig.3 and Fig.4 may have different functions, but are not required to do so. The combination drive 300 comprises a casing 310. Fixed to a surface of the casing 310 are the IDE/ATAPI interface connector 260 and power source connector 281. Fixed inside the casing 310 are the optical disc drive 250 and the non-volatile data-storage device 240. The data/command bus 270 connects the IDE/ATAPI interface connector 260 to the optical disc drive 250, but not directly to the data-storage device 240 in this embodiment. This bus 270 arrangement allows the combination drive 300 to appear to a host controller and be controlled by the host controller as a single logical read/write device. Both the optical disc drive 250 and the data-storage device 240 again share the power source connector 281. With the exception of mechanical portions of the optical disc drive 250, it is again preferable to integrate the optical disc drive 250 and the data-storage device 240 onto a single printed circuit board (PCB).

As with the combination drive 200, the optical disc drive 250 of the combination drive 300 may comprise the optical disc drive mechanism 252, which includes the mechanical portions of an optical disc drive as known to those skilled in the art. Also comprised by the optical disc drive 250 may be an IDE/ATAPI optical disc drive controller 351, which is coupled to the data/command bus 270 for communications with a host controller. The IDE/ATAPI optical disc drive controller 351 may also be coupled to the SDRAM 253 for a working memory, to external switches of the optical disc drive mechanism 252, to the diode-amplifier 254, to the BD8211 6CH power driver 255, to other components 257, and to the flash memory 256 for access to operational codes. The exact parts and/or couplings shown in Fig.4 are for illustration only and may be altered according to design considerations without departing from the spirit of the invention.

Again, the non-volatile data-storage device 240 comprises one or more flash memories 242, each coupled to the IDE/ATAPI flash controller 241 via a data/command bus 243. One of the major differences between the combination drive 300 and the combination drive 200 is that the IDE/ATAPI flash controller 241 of the combination drive 300 is not directly coupled to the data/command bus 370 for communications with a host. Instead, the IDE/ATAPI flash controller 241 is coupled to the IDE/ATAPI optical disc drive controller 351 via a data/command bus 371. In another embodiment, the flash memory 256 and the flash memory 242 may be integrated into a single physical unit which is logically divided into non-overlapping separate logical units, a first logical unit for supplying control codes to the IDE/ATAPI ODD controller 351 and a second logical unit for the IDE/ATAPI flash controller 241.

When coupled to a host controller (such as a computer or other electronic device), the optical disc drive 250 and the data-storage device 240 appear to the host controller and are controlled by the host controller as a single logical device, preferably as a read/write device where all data access between the host controller and either the optical disc drive mechanism 252 or the data-storage device 240 flows through the IDE/ATAPI optical disc drive controller 251. The IDE/ATAPI optical disc drive controller 251 may be configured to transfer data between itself and either the optical disc drive mechanism 252 or the data-storage device 240 according to command codes or data addresses.

An additional benefit of the combination drive 300 is that it is possible for data transfers between the optical disc drive mechanism 252 and the data-storage device 240 to be handled directly via the IDE/APAPI controller 351 without the need of additionally transferring data to and from the host controller, greatly increasing speed and decreasing host workload. In at least one other embodiment of the present invention, an embodiment similar to the combination drive 300 permit full data access and transfers via the IDE/APAPI controller 351 without the need of a host, only requiring a power source, whether via the power source connector 281 or an alternative such as batteries.

The embodiments of the present invention overcome disadvantages of a separate optical disc drive and hard disk drive by reducing manufacturing costs because only a single combination drive is required, reducing the physical space required for mounting, eliminating moving parts of a traditional hard disk drive such as robustness, life time, wearing out, and environmental conditions, requiring only a single IDE/ATAPI cable and a single power cable connection for the combination device, and vastly reducing the high power requirements of a traditional mechanical hard disk drive.

Possible applications of the invention are automotive NAVI / Multimedia systems, FLAT-TV, TV - Set -Top Boxes , Game Consoles , DVD-Recorders, PC and Notebooks. In general, this invention may used for all products wherever an ODD drive and a Mass Data Storage Device is required.

In summary, the present application discloses two major embodiments of a novel combination drive that marries the best features of an optical disc drive and a solid-state drive into a single device. One embodiment allows each of the optical disc drive and the solid-state drive to be individually seen and controlled by a host controller, while a second major embodiment allows both the optical disc drive and the solid-state drive to be seen and controlled by the host as if they were a single read/write device. In both embodiments, a single power source connector and a single IDE/ATAPI connector for data/command communications with a host controller are utilized. As the concept does not need any mechanical moving parts for data-storage device, the robustness in terms of shock sensitivity, environmental impact, wear-out and lifetime are significantly improved. Due to fewer components, the quality level (ppm) would be improved compared to a solution with a separate traditional hard disk drive. Reduced power consumption, better heat dissipation, optimization of data/command behavior and reduced total system costs because of the cost down trend of NAND -FLASH components are further benefits.

Additionally with the second embodiment where the optical disc drive and the solid-state drive appear as only one logical device on the host interface, the possibility for direct data exchange between optical disc drive and solid-state drive (via the optical disc drive controller) without using a host unit to copy the data is a distinct advantage. Also, on a given host design with a maximum number of bus devices, having both the optical disc drive and the solid-state drive appear and be controlled as a single device effectively allows devices of a number greater than the maximum number of bus devices to be simultaneously connected to a single host, or alternatively the designed maximum number of bus devices for a given host could be reduced, further saving in cost and complexity of the host.

## Claims

1. A combination drive comprising:
a housing (210, 310);
an IDE/ATAPI connector (260) fixed to a surface of the housing (210, 310);
an optical disc drive controller (251, 351) within the housing (210, 310) formed on a printed circuit board and coupled to the IDE/ATAPI connector (260) via a data/command bus (270, 370);
an optical disc drive mechanism (252) within the housing (210, 310) coupled to the optical disc drive controller (251, 351); and
**characterized by**:
a solid-state drive (240) within the housing (210, 310) coupled to the IDE/ATAPI connector (260) via the data/command bus (270, 370).

2. The combination drive of claim 1 further **characterized by** a power source connector (281) fixed to the surface of the housing (210, 310) and coupled to both the optical disc drive controller (251, 351) and the solid-state drive (240).

3. The combination drive of claim 2 **characterized in that** a host controller (20) connected to the combination drive via the IDE/ATAPI connector (260) controls the optical disc drive controller (251, 351) and the solid-state drive (240) as if two individual logical bus devices.

4. The combination drive of claim 2 **characterized in that** a host controller (20) connected to the combination drive via the IDE/ATAPI connector (260) controls the optical disc drive controller (251, 351) and the solid-state drive (240) as a single logical bus device.

5. The combination drive of claim 2 **characterized in that** the solid-state drive (240) further comprises a flash controller (241) coupled in series between at least one flash memory chip (242) and the data/command bus (270).

6. The combination drive of claim 4 **characterized in that** the printed circuit board further comprises a volatile memory (253 as a working memory for the optical disc drive controller (251, 351) and another non-volatile memory (256) storing operating codes for the optical disc drive controller (251, 351).

7. The combination drive of claim 6 **characterized in that** the optical disc drive controller (251, 351) controls data transfer between the solid-state drive (240) and the optical disc drive mechanism (252) according to the operating codes and no intervening transfer of the data to the host (20) occurs during data transfer between the solid-state drive (240) and the optical disc drive mechanism (252).

8. The combination drive of claim 1 **characterized in that** the optical disc drive controller (251, 351) controls data transfer between the solid-state drive (241) and the optical disc drive mechanism (252) without an intervening transfer of the data to a host (20) during data transfer between the solid-state drive (240) and the optical disc drive mechanism (252).

9. A combination drive comprising:
a housing (310);
an IDE/ATAPI connector (260) fixed to a surface of the housing (310);
an optical disc drive controller (351) within the housing (310) formed on a printed circuit board and coupled to the IDE/ATAPI connector (260) via a data/command bus (370);
an optical disc drive mechanism (252) within the housing (310) coupled to the optical disc drive controller (351); and
**characterized by**:
a solid-state drive (240) within the housing (310) coupled in series to the optical disc drive controller (351) then to the IDE/ATAPI connector (260) via the data/command bus (370).

10. The combination drive of claim 9 further **characterized by** a single power source connector (281) fixed to the surface of the housing (310) and coupled to both the optical disc drive controller (351) and the solid-state drive (240).

11. The combination drive of claim 10 **characterized in that** the solid-state drive (240) further comprises a flash controller (241) coupled in series between at least one flash memory (242) and the optical disc drive controller (351).

12. The combination drive of claim 11 **characterized in that** a host controller (20) connected to the combination drive via the IDE/ATAPI connector (260) controls the optical disc drive controller (351) and the data-storage device (240) as a single logical bus read/write device with both the optical disc drive (240) and the data-storage device (240) accessible to the user for data storage.

13. The combination drive of claim 12 **characterized in that** the printed circuit board further comprises a volatile memory (253) as a working memory for the optical disc drive controller (351) and another non-volatile memory (256) storing operating code utilized by the optical disc drive controller (351).

14. The combination drive of claim 13 **characterized in that** the optical disc drive controller (351) controls data transfer between the host controller (20) and the solid-state drive (240) according to the operating code.

15. The combination drive of claim 13 **characterized in that** the optical disc drive controller (351) controls data transfer between the solid-state drive (240) and the optical disc drive mechanism (252) according to the operating code.

16. The combination drive of claim 15 **characterized in that** data transfer between the solid-state drive (240) and the optical disc drive mechanism (252) according to the operating code has no intervening transfer of the data to the host controller (20) during data transfer between the solid-state drive (240) and the optical disc drive mechanism (252).

17. The combination drive of claim 9 **characterized in that** the optical disc drive controller (351) controls data transfer between the solid-state drive (240) and the optical disc drive mechanism (252) without an intervening transfer of the data to a host controller (20) during data transfer between the solid-state drive (240) and the optical disc drive mechanism (252).
